# EUROPEAN PATENT SPECIFICATION

(11) **EP 2 005 698 B1**
(45) Date of publication and mention of the grant of the patent: **04.01.2012**
(21) Application number: 07724163.6
(22) Date of filing: 11.04.2007
(51) Int. Cl.: H04L 29/06

(54) **METHOD FOR PROVIDING WEB APPLICATION SECURITY**
VERFAHREN ZUR BEREITSTELLUNG VON WEBANWENDUNGSSICHERHEIT
PROCEDE PERMETTANT D'ASSURER LA SECURITE D'APPLICATION INTERNET

(30) Priority: 13.04.2006 EP 06007879
(43) Date of publication of application: 24.12.2008
(73) Proprietor: Art of Defence GmbH, 93055 Regensburg (DE)
(72) Inventor: MEISEL, Alexander, 93055 Regensburg (DE)
(74) Representative: advotec.
(86) International application number: PCT/EP2007/003222
(87) International publication number: WO 2007/118657

(56) References cited:
- US-A1- 2003 005 118

## Description

### BACKGROUND OF THE INVENTION

### Technical Field of the Invention

The present invention relates in general to Web application security and in particular provides a mean to avoid phishing attacks. The method relies on an advanced state management in HTTP protocol by using specific tokens appended to HTTP requests/responses.

### Description of the Related Art

### HyperText Transfer Protocol

HyperText Transfer Protocol (HTTP) is the primary method used to convey information on the World Wide Web (WWW). The original purpose was to provide a way to publish and receive HyperText Markup Language (HTML) pages. HTML is a markup language designed for the creation of web pages and other information viewable in a browser.

Development of HTTP was co-ordinated by the World Wide Web Consortium and working groups of the Internet Engineering Task Force, culminating in the publication of a series of RFCs (Requests for Comments), most notably RFC 2616, which defines HTTP/1.1, the version of HTTP in common use today.

Like most network protocols, HTTP uses the client-server model: An HTTP client, such as a web browser, typically initiates a request by establishing a TCP connection and sending a request message to a particular port on a remote server ; The server then returns a response message, usually containing the resource that was requested. After delivering the response, the server closes the connection (making HTTP a stateless protocol, i.e. not maintaining any connection information between transactions). In that point, HTTP differs from other TCP-based protocols such as FTP. This design makes HTTP ideal for the World Wide Web, where pages regularly link to pages on other servers. It can occasionally pose problems, as the lack of a persistent connection necessitates alternative methods of maintaining users' "state". Many of these methods involve the use of "cookies", but this is often not sufficient from a security point of view.

### HTTP cookie

An HTTP cookie (usually called simply a cookie) is a packet of information sent by a server to a WWW browser and then sent back by the browser each time it accesses that server. Cookies can contain any arbitrary information the server chooses and are used to maintain state between otherwise stateless HTTP transactions. Typically this is used to authenticate or identify a registered user of a web site as part of their first login process or initial site registration without requiring them to sign in again every time they access that site.

Such a solution is described in US2003/0005118.

### Structure of HTTP Transactions

The format of the request and the format of the response messages are similar and English-oriented. Both kinds of messages substantially consist of:
- An initial line (different for request vs. response);
- Zero or more header lines ;
- A blank line (i.e. a CRLF by itself) ;
- An optional message body (e.g. a file, or query data, or query output).

### Initial Request Line

The initial line is different for the request than for the response. A request line has three parts, separated by spaces: A method name, the local path of the requested resource, and the version of HTTP being used. A typical request line is:
GET /path/to/file/index.html HTTP/1.1

The path is the part of the URL after the host name, also called the request URI (a URI is like a URL, but more general). The most common HTTP request methods are:
1. **GET** is by far the most common HTTP method, for statically requesting a resource by specifying a URL. It says "give me this resource" ;
2. **POST** Similar to GET, except that a message body, typically containing key-value pairs from an HTML form submission, is included in the request ;
3. **PUT** Used for uploading files to a specified URI on a web-server ;
4. **HEAD** Identical to GET, except that the page content is not returned; just the headers are. Useful for retrieving meta-information.

### Initial Response Line

The initial response line, called the status line, also has three parts separated by spaces: the HTTP version, a response status code that gives the result of the request, and an English reason phrase describing the status code. Typical status lines are:
HTTP-/1.1 200 OK
or
HTTP/1.1 404 Not Found

The status code is meant to be computer-readable; the reason phrase is meant to be human-readable, and may vary. The status code is a three-digit integer, and the first digit identifies the general category of response. The most common status codes are:
1. **200 OK** The request succeeded, and the resulting resource (e.g. file or script output) is returned in the message body ;
2. **404 Not Found** The requested resource doesn't exist ;
3. **302 Moved Temporarily** redirects the client to another URL ;
4. **500 Server Error** An unexpected server error. The most common cause is a server-side script that has bad syntax, fails, or otherwise cannot run correctly.

### Header Lines

Header lines provide information about the request or response, or about the object sent in the message body.

The header lines are in the usual text header format, which is: one line per header, of the form "Header-Name: value", ending with CRLF. The format is defined in RFC 822, section 3 (same format as for email and news postings). HTTP 1.0 defines 16 headers, though none are required. HTTP 1.1 defines 46 headers, and one (Host:) is required in requests. For Net-politeness, following headers are often included in requests:
1. **From** This header gives the email address of whoever's making the request, or running the program doing so (user-configurable, for privacy concerns) ;
2. **User-Agent** This header identifies the program that is making the request, in the form "Program-name/x.xx", where x.xx is the (mostly) alphanumeric version of the program.
3. **Referer** This header contains the URL of the document from which the request originated.

The following headers are often included in responses:
1. **Server** This header is analogous to the User-Agent-header: it identifies the server software in the form "Program-name/x.xx". For example, one beta version of Apache's server returns "Server: Apache/1.3b3-dev" ;
2. **Last-Modified** This header gives the modification date of the resource that's being returned. Used in caching and other bandwidth-saving activities.

### The Message Body

An HTTP message may have a body of data sent after the header lines. In a response, this is where the requested resource is returned to the client (the most common use of the message body), or perhaps explanatory text if there's an error. In a request, this is where user-entered data or uploaded files are sent to the server.

If an HTTP message includes a body, there are usually header lines in the message that describe the body. In particular:
1. **Content-Type** This header gives the MIME-type of the data in the body, such as text/html or image/gif ;
2. **Content-Length** This header gives the number of bytes in the body.

### Secure HTTP

HTTPS is the secure version of HTTP, using SSL/TLS to protect the traffic. The protocol normally uses TCP port 443. SSL, originally created to protect HTTP, is especially suited for HTTP since it can provide (some) protection even if only one side to the communication, the server, is authenticated.

### Man in the middle attack

A man in the middle attack (MITM) is an attack in which an attacker is able to read, insert and modify at will, messages between two parties without either party knowing that the link between them has been compromised. Even with the use of HTTPS, an attacker may be able to observe and intercept messages going between the two victims. In particular, this will be the case if the attacker is able to fool the client (e.g. victim's browser) into connecting to him rather than the requested server. The attacker then connects to the server on behalf of the victim, and effectively sits between the communicating parties, passing messages back and forth. He plays the role of the server on one side, and the client on the other.

### Phishing attack

Phishing is the act of attempting to fraudulently acquire sensitive information (e.g. credit card numbers, account user-names, passwords, social security numbers) by masquerading as a trustworthy person or company. Phishing attacks use both social engineering and technical subterfuge.

Social-engineering schemes use spoofed e-mails to lead consumers to counterfeit websites designed to trick recipients into divulging sensitive information (i.e. the victim thinks to be connected to a trustworthy server). Hijacking brand names of banks, e-retailers and credit card companies, phishers often convince recipients to connect to their counterfeit websites. The following techniques are often used to hijack original brand names: Use of the "@" symbol in a URL, for example
http://www.mybank.com@members.attacker.com/.

Even if the first part of the link looks legitimate, this address will attempt to connect as a user www.mybank.com to the server members.attacker.com. The same is true for misspelled URLs or sub-domains, for example
http://www.mybank.com.attacker.net

Technical subterfuge schemes typically use DNS spoofing to misdirect users to fraudulent sites or proxy servers.

### SUMMARY OF THE INVENTION

In view of the above, an object of the present invention is to provide a method and an electronic device that allow an HTTP server to detect whether a remote client is victim of a Phishing attack. The invention is defined by the appended claims. In particular the present invention prevents a part of a Web site from being directly reachable. The present invention also prevents a part of a Web site from being reachable via outside links.

To achieve the above-mention object, the method according to the invention involves forwarding/modifying HTTP requests from the client to the server and forwarding/modifying HTTP responses from the server to client. The method involves appending a specific token to an HTTP response from the server to client upon an initial HTTP request made by the client. The method involves returning the token in each subsequent HTTP request from the client to the server. When the HTTP server receives a request accompanied by a token, the method according to the invention judges whether the token is valid or not. When the token is so validated, the HTTP server sends the requested document to the HTTP client.

According to a preferred embodiment, the token is typically a digital signature such as a cryptographic hash of client unique identifiers (such as IP address and browser version) encrypted with a secret key. The token may be hidden in the standard HTTP protocol (e.g. URL-encoded parameter or cookie).

In a preferred embodiment, the present method involves comparing the Referer header of incoming requests with URLs of known phishing Websites (stored in a local database or on a remote server).

In another embodiment, the present method involves returning a warning message to the client if it is victim of a Phishing attack.

In still another embodiment of the invention, an HTTP server access control may be maintained by programming the client browser to store a token or a similar tag for use in later HTTP requests on the same server. This embodiment may be achieved by storing an URL-encoded token in the clients' browser bookmarks.

The invention also involves an electronic device to implement the above-mentioned method. The electronic device includes a Web server module and an independent anti-phishing module. The Web server module receives the HTTP requests and forwards them to the anti-phishing module using a communication protocol.

### BRIEF DESCRIPTION OF THE DRAWINGS

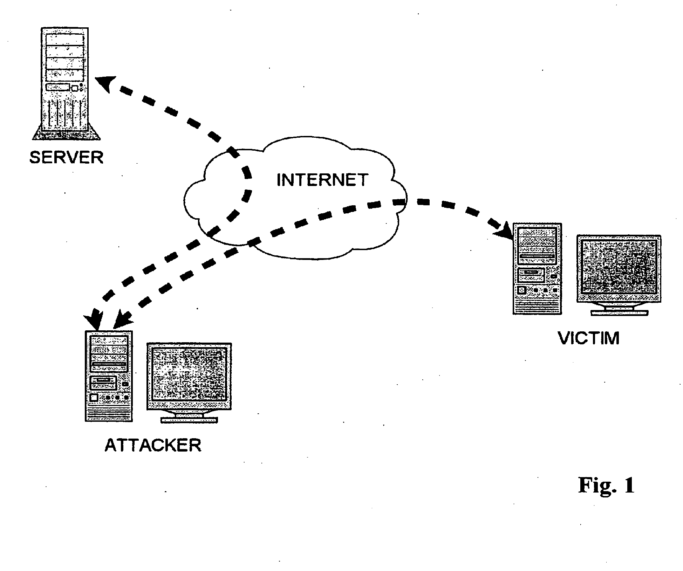

FIG. 1 is a diagram illustrating a man in the middle (MITM) attack;

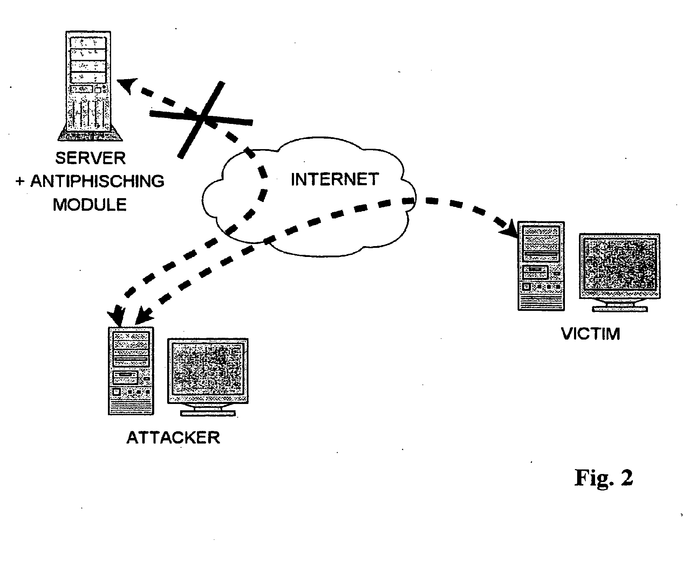

FIG. 2 is a diagram illustrating the prevention a man in the middle attack;
FIG. 3 is a diagram illustrating the architecture of the invention;
FIG. 4 is a flowchart describing the behavior of the invention; and
FIG. 5 is a flowchart describing the preferred embodiment of the invention.

### DETAILED DESCRIPTION OF THE INVENTION

The method according to an embodiment will be described with reference to the accompanying drawings, wherein the same reference numbers denote the same elements.

The invention provides a mean to protect a part of a Website from being directly reachable and from being reachable via outside links. A white/black/grey list mechanism also protects the Website from being linked from known phishing Websites. Typically, a phishing attack involves the use of a fake Website and/or email. The fake Website and/or email are usually linked to the original Website they are trying to counterfeit. The present invention will detect such links and inform the customer that he is victim of a phishing attack.

### Functioning

### Generalities

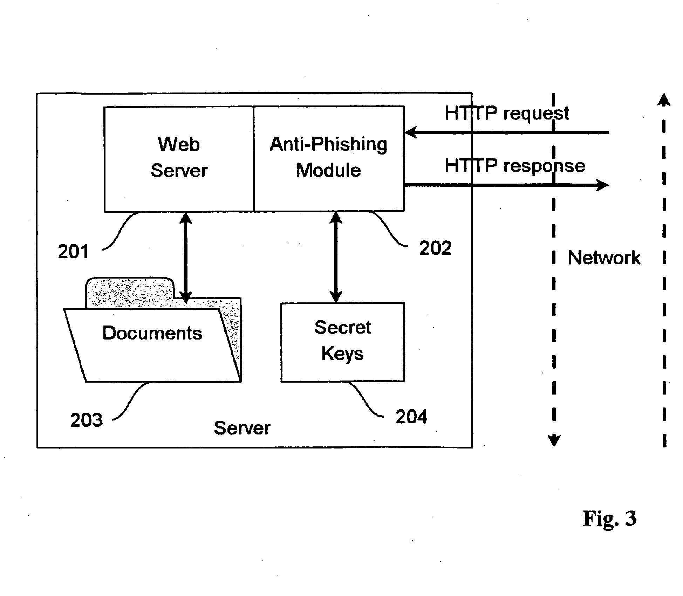

Now, it is referred to Fig. 3 showing a system according to the invention. This system comprises Web server 201 and a Web server module 202 being a Web server Plugin (anti-Phishing module). Each incoming and outgoing HTTP request passes through the Plugin. Further, reference number 203 is assigned to documents which are the data used by a Web application (e.g. databases systems, HTML pages, scripts, etc.). This is typically those data that the attackers try to corrupt/steal/erase. Further, the system comprises secret keys 205 which are cryptographic keys used by the invention to secure the HTTP traffic.

Thus, according to the invention, a Web-server module 202 is provided. Each HTTP request to the Web-server 201 protected by the module 202 is checked-out by the invention before being forwarded to the Web-server 201 (and maybe modified). HTTP responses are also filtered by the module 202 and may be modified if necessary. A Website protected by the invention should have one page that is reachable from other sites (i.e. via a link) and which is also directly accessible (i.e. by typing its URL in a Web browser). This page is typically the entrance page of the Website (this is user-configurable). A legitimate user has to connect to this page first to gain a valid token. Once the legitimate user has a token, it can connect to the rest of the Website. The token is typically a digital signature such as a cryptographic hash of client unique identifiers (such as IP address and browser version) encrypted with a secret key 204. The secret key is known only by the server (which makes it impossible for a phisher to generate a fake token). Typically, the token is sent to the client either by using a cookie, either as an URL-encoded parameter. We describe in the following the functioning of the invention when the token is URL-encoded. The same scheme remind true for the use of cookies or any other mean.

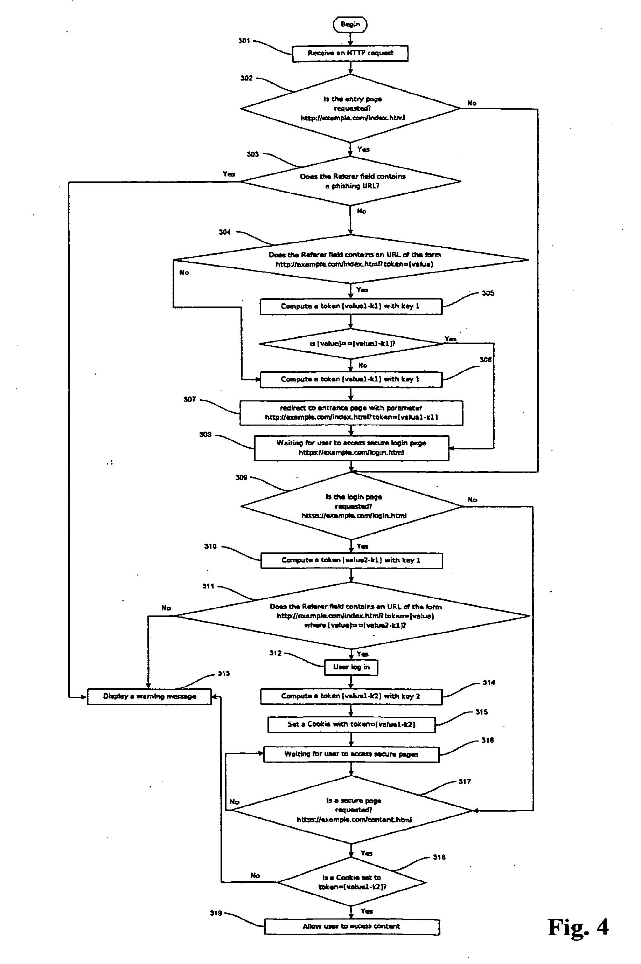

Now it is referred to Fig. 4 showing an overview of one embodiment of the method according to the invention.

In the beginning, in step 301 the module 202 receives an HTTP request. In step 302, the module tests the HTTP request. If the entry page is requested, then it is gone to step 303, else it is gone to step 309. In step 303, if the Referer field of the request contains a Phishing URL (determined using blacklist), then it is gone to step 313, else it is gone to step 304.

In step 304, the module 202 tests the presence of a token in the Referer field. If there is no token in the Referer, then it is gone to step 306, else to step 305. A token is typically a digital signature such as a cryptographic hash of client unique identifiers (such as IP address and browser version) encrypted with a secret key.

In step 305, the module 202 computes a token [value 1-kl] using the key 1 204 stored on the server.

If the token present in the Referer field (step 304) has the value [value1-k1], then it is gone to step 308 (authentication passed), else it is gone to step 306 (authentication failed).

In step 306, the module computes a token [value1-k1] using the key 1 204 stored on the server.

In step 307, the module 202 redirects the client to the entry page with a valid token in URL (the token computed in step 306).

In step 308, the module 202 invention has recognized a valid token in the Referer field of the HTTP request. The user is allowed to access the login page.

In step 309, the module 202 waits until the login page is requested. If the login page is requested then it is gone to step 310, else to step 317.

In step 310, the module 202 computes a token [value2-k1] using the key 1 204 stored on the server.

In step 311, the module 202 tests the presence of a token in the Referer field. If the token present in the Referer field (step 310) has the value [value2-k1], then it is gone to step 312 (authentication passed), else to step 313 (authentication failed, display a warning message). In step 312, the user is logged in.

In step 313, the module 202 enforces the Web server 201 to redirect the client to a specific page (typically a warning message informing the client that something went wrong).

In step 314, the module 202 computes a token [value1-k2] using the key2 stored on the server.

In step 315, the module 202 sets a Cookie containing a parameter token=[value1-k2]. The user is now authenticated and started a secure session. The user is now allowed to access the secure part of the Web site.

In step 316, the module 202 waits until a page from the protected part of the Web site is requested (typically a secure page requiring user authentication).

In step 317, it is decided, whether a secure page is requested. In this case, it is gone to step 318, else to step 316.

In step 318, the module 202 checks the presence of a Cookie containing a valid token in order to allow (or deny) the access to a secure page. If the HTTP request contains a Cookie with a valid token (token=[value1-k2]), then it is gone to step 319, else to step 313.

In step 319, the user is allowed to access the content protected by the invention.

### URL-encoded token

In particular, when the client access the entrance page 302 (e.g. http://www.example.com/index.html), the request is intercepted by the module. The module 202 modifies the HTTP request in order to redirect the users' browser to the same page, but with an URL-encoded parameter containing the token 307:
http://www.example.com/index.html?token=239e477371 f8dcfcba4e92f5ba3c8

To access the login page 309 (e.g. https://www.example.com/login.html), the client must follow a link from the entrance page. The module checks whether the Referer header in the HTTP request contains the URL of the entrance page appended with a valid token 311. If the URL and the token are correct, the module forward the HTTP request to the HTTP server, if not the module denies the access to the login page and builds a new HTTP request containing the URL of a warning page 313. In this case, the client is:
- Either victim of a Phishing attack (his requests are forwarded by a phisher, but the token is not valid for the phisher, because the IP address and browser version are different) ;
- Or the client attempted to directly reach the login page, which is not allowed.

Once the client has reached the login page, he can proceed to log in. If the login succeeds 312, the module computes a second token using another secret key 314 (to protect the secure part of the Website). The module modifies the HTTP response from the Web Server to include a cookie containing the second token 315.

Each time the client try to access a secure part of the Website 317, the module checks whether a cookie with a valid token was set 318. If not 313, it means that the client is:
- Either victim of a Phishing attack (his requests are forwarded by a phisher, but the token is not valid for the phisher, because the IP address and browser version are different) ;
- Or the client attempted to directly reach the login page, which is not allowed.

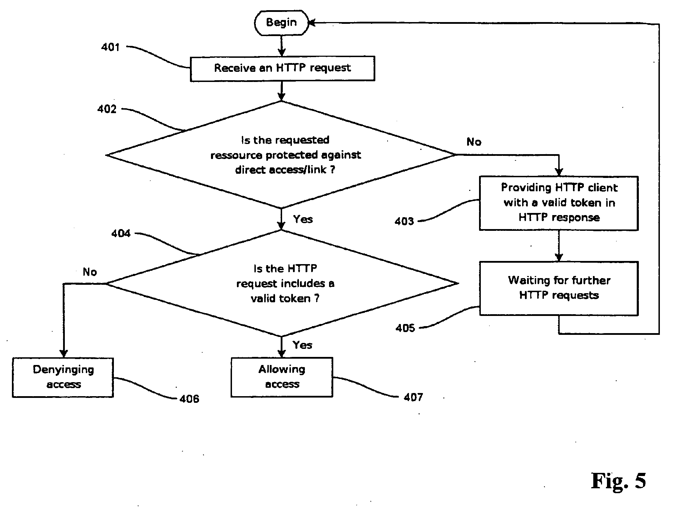

Now, it is referred to Fig. 5 showing the behavior of a module according to the invention.

**In step 401**, the module receives an HTTP request. In step **402**, the module checks whether the requested resource is in a protected (secure) area of the server. If the requested resource is protected against direct access, then it is gone to **404**, else to **403**.

In step **403**, after a first HTTP request from the client without a valid token, the invention provides the client with a valid token in HTTP response. A token is typically a digital signature such as a cryptographic hash of client unique identifiers (such as IP address and browser version) encrypted with a secret key. In step **405**, the module waits until it receives an HTTP request. Then, the procedure is started again.

If it is decided in step 402 to go to step 404, in step **404** the module tests whether the HTTP request contains a valid Token. If the HTTP request contains a valid token, then it is gone go to step **407** (authentication passed), else to **406** (authentication failed, access denied). In step **406**, the module denies the access to the requested resource. In step **407**, the invention allows the access to the requested resource.

### White/Grey/Black-lists

The invention also features a general referer checking mechanism (independent from the token discussed here-above). A white-list contains a list of Websites which are authorized to link content in the protected Website. A blacklist contains a list of Websites which are known to be phishing Website. A grey-list stores the referer of the successive request if they are neither contained into the white-list nor in the blacklist. A statistical analysis (as well as AI/learning techniques) periodically applied on the grey-list allow to decide whether a referrer should be moved to the blacklist or not (for example if a lot of request suddenly contain the same referer, we can reasonably suppose that this referer is the address of a phishing Website).

Each HTTP request to a Web-server protected by the invention is checked-out by the invention and the referer is analyzed: If the request was issued from a known phishing Website, then the access is denied and a warning message is sent to the client to inform him that his requests are forwarded by a phisher.

## Claims

1. A method for an HTTP server to decide whether a remote client is victim of a phishing attack, comprising:
- receiving a first HTTP request from the remote client on said HTTP Server;
- responding to said first HTTP request, wherein a token is added to the response submitted to said remote client;
- receiving a second HTTP request on said HTTP server, wherein the second HTTP request comprises a referrer;
- judging whether said referrer of the second HTTP request includes said token;
- judging whether the token originates from said remote client;
- processing the second HTTP request when said remote client has really issued the second HTTP request.

2. The method according to claim 1, wherein said token is a digital signature.

3. The method according to claim 2, wherein said digital signature is a cryptographic hash.

4. The method according to one of Claims 1 to 3, wherein a HTML warning page is returned, if said token does not match the client.

5. The method according to claim 1, further comprising: allowing the real emitter of an HTTP requests to access a resource.

6. The method according to one of Claims 1 to 5, wherein a HTTP Server access control is maintained by programming the client browser to store a token or a similar tag for use in later HTTP requests on the same server.

7. Device for deciding whether a remote client is victim of a phishing attack, comprising a Web server and a module for implementing on said HTTP server and for carrying out the method according to one of Claims 1 to 6.

## Patentansprüche

1. Verfahren für einen HTTP-Server zur Feststellung, ob ein Remote-Client Opfer eines Phishing-Angriffs ist, umfassend:
- Empfang einer ersten HTTP-Anfrage von dem Remote-Client auf dem HTTP-Server;
- Beantwortung der ersten HTTP-Anfrage, wobei der dem Remote-Client übermittelten Antwort ein Token angehängt wird;
- Empfang einer zweiten HTTP-Anfrage auf dem HTTP-Server, wobei die zweite HTTP-Anfrage einen Referrer umfasst;
- Beurteilung, ob der Referrer der zweiten HTTP-Anfrage das Token enthält;
- Beurteilung, ob das Token von dem Remote-Client stammt;
- Verarbeitung der zweiten HTTP-Anfrage, wenn der Remote-Client die zweite HTTP-Anfrage tatsächlich ausgegeben hat.

2. Verfahren nach Anspruch 1, wobei das Token eine digitale Signatur ist.

3. Verfahren nach Anspruch 2, wobei die digitale Signatur ein kryptografischer Hash ist.

4. Verfahren nach einem der Ansprüche 1 bis 3, wobei eine HTML-Warnseite zurückgeschickt wird, wenn das Token mit dem Client nicht übereinstimmt.

5. Verfahren nach Anspruch 1, ferner umfassend: Zulassen des Zugriffs auf eine Ressource durch den tatsächlichen Absender einer HTTP-Anfrage.

6. Verfahren nach einem der Ansprüche 1 bis 5, wobei eine HTTP-Server-Zugriffskontrolle erfolgt, indem der Client-Browser so programmiert wird, dass ein Token oder ein ähnlicher Marker zur Verwendung in späteren HTTP-Anfragen auf demselben Server gespeichert wird.

7. Vorrichtung zur Feststellung, ob ein Remote-Client Opfer eines Phishing-Angriffs ist, umfassend einen Webserver und ein Modul zur Implementierung auf dem HTTP-Server und zur Durchführung des Verfahrens nach einem der Ansprüche 1 bis 6.

## Revendications

1. Procédé pour un serveur HTTP pour détérminer si un client distant est victime d'une attaque d'hameçonnage, comprenant:
- réception d'une première requête HTTP à partir du client distant sur ledit serveur HTTP;
- réponse à ladite première requête HTTP, dans lequel un jeton est ajouté à la réponse soumise au client distant;
- réception d'une deuxième requête HTTP sur le serveur HTTP, dans lequel la deuxième requête HTTP contient un référant;
- jugement si le référant de ladite deuxième requête HTTP contient ledit jeton;
- jugement si le jeton provient du client distant;
- traitement de la deuxième requête HTTP si le client distant a véritablement émis la deuxième requête HTTP.

2. Procédé selon la revendication 1, dans lequel le jeton est une signature digitale.

3. Procédé selon la revendication 2, dans lequel la signature digitale est un hash cryptographique.

4. Procédé selon l'une quelconque des revendications 1 à 3, dans lequel une page HTML d'avertissement est renvoyée si le jeton ne correspond pas au client.

5. Procédé selon la revendication 1, en outre comprenant: admission de l'accès à une ressource par le véritable émetteur de la requête HTTP.

6. Procédé selon l'une quelconque des revendications 1 à 5, dans lequel un contrôle d'accès au serveur HTTP est maintenu en programmant le le navigateur client de manière à ce qu'un jeton ou un autre marqueur est stocké pour être utilisé lors de requêtes HTTP ultérieures sur le même serveur.

7. Dispositif pour détérminer si un client distant est victime d'une attaque d'hameçonnage, comprenant un serveur Web et un module pour l'implementation sur le serveur HTTP et pour la mise en oeuvre du procédé selon l'une quelconque des revendications 1 à 6.
